(19) **Europäisches Patentamt European Patent Office Office européen des brevets**

(11) **EP 4 564 343 A1**

(12) **EUROPEAN PATENT APPLICATION**

(43) Date of publication:
04.06.2025 Bulletin 2025/23

(21) Application number: 24214081.2

(22) Date of filing: 20.11.2024

(51) International Patent Classification (IPC):
*G09G 3/3208* (2016.01)    *G09G 5/10* (2006.01)

(52) Cooperative Patent Classification (CPC):
**G09G 3/3208; G09G 5/10;** G09G 2320/0626;
G09G 2360/144; G09G 2360/145

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 01.12.2023 US 202318526597

(71) Applicant: **STMicroelectronics International N.V.
1228 Plan-les-Ouates, Geneva (CH)**

(72) Inventors:
• **FICHOT, Timothee
38000 GRENOBLE (FR)**
• **CHOULY, Antoine
75014 PARIS (FR)**

(74) Representative: **Casalonga
Casalonga & Partners
Bayerstraße 71/73
80335 München (DE)**

(54) **DETERMINING CONTRIBUTION OF DISPLAY SCREEN BRIGHTNESS TO AMBIENT LIGHT MEASUREMENTS IN A DISPLAY ENVIRONMENT**

(57)    An example method, electronic device, and computer program product for determining a screen brightness contribution to environment light, are provided. The method includes receiving (802) illumination measurements representing the environment light received at an optical sensor positioned near a display screen. Display screen on illumination measurements, corresponding to illumination measurements captured in an instance in which the display pixels proximate the optical sensor are illuminated are identified (804). Display screen off illumination measurements, corresponding to illumination measurements captured in an instance in which the display pixels proximate the optical sensor are not illuminated are identified (806). A screen brightness amplitude corresponding to a comparison between the display screen on illumination measurements and the display screen off illumination measurements is determined (808). The screen brightness contribution is determined (810) based on the screen brightness amplitude and a screen contribution correlation coefficient corresponding to a relationship between the screen brightness amplitude and the screen brightness contribution.

FIG. 8

Processed by Luminess, 75001 PARIS (FR)

**Description**

**TECHNOLOGICAL FIELD**

Embodiments of the present disclosure relate generally to determining the ambient light in a display environment, and more particularly, to determining the contribution of display screen light to the ambient light measurement in a display environment.

BACKGROUND

Variable screen brightness is a common feature of digital display screens. For example, a phone screen, laptop screen, or television, may adjust the brightness of the display screen based on the ambient light present in the display environment. A common technique is to measure the ambient light of the display environment and adjust the brightness of the digital display accordingly. For example, increase the brightness of the display screen in an instance in which the measured ambient light is relatively high, and decrease the brightness of the display screen in an instance in which the ambient light is relatively low.

Applicant has identified many technical challenges and difficulties associated with determining the ambient light in a display environment. Through applied effort, ingenuity, and innovation, Applicant has solved problems related to the determination of accurate ambient light measurements in a display environment by developing solutions embodied in the present disclosure, which are described in detail below.

BRIEF SUMMARY

Various embodiments are directed to an example method, electronic device, and computer program product for determining a screen brightness contribution to an ambient light measurement of environment light in a display environment. In some embodiments, a method for determining a screen brightness contribution to environment light may comprise receiving a plurality of illumination measurements corresponding to the environment light comprising the screen brightness contribution received at an optical sensor positioned proximate a display screen, wherein the display screen comprises a plurality of display pixels positioned to emit transmitted light into a display environment. In some embodiments, the method may further comprise identifying one or more display screen on illumination measurements corresponding to illumination measurements captured in an instance in which the display pixels proximate the optical sensor are illuminated. The method may further comprise identifying one or more display screen off illumination measurements corresponding to illumination measurements captured in an instance in which the display pixels proximate the optical sensor are not illuminated and based at least in part on a polynomial approximation. The method may further comprise determining a screen brightness amplitude corresponding to a comparison between the one or more display screen on illumination measurements and the one or more display screen off illumination measurements. In addition, the method may comprise determining the screen brightness contribution based at least in part on the screen brightness amplitude and a screen contribution correlation coefficient corresponding to a relationship between the screen brightness amplitude and the screen brightness contribution.

In some embodiments, the plurality of display pixels comprise organic light emitting diodes (OLED).

In some embodiments, the optical sensor is configured to determine illumination measurements for a plurality of color channels.

In some embodiments, the screen brightness contribution is determined for each color channel of the plurality of color channels.

In some embodiments, the method may further comprise receiving environment light during a calibration process in which the display environment includes no ambient light and determining a screen contribution correlation coefficient corresponding to a relationship between the screen brightness amplitude and the environment light.

In some embodiments, the method may further comprise determining ambient light in the display environment by removing the screen brightness contribution from the environment light.

In some embodiments, the method may further comprise adjusting a brightness of the display screen based on the ambient light in the display environment.

In some embodiments, the polynomial approximation comprises performing a polynomial interpolation based on a minimum display screen off illumination measurement and determining an absolute minimum display screen off illumination measurement based on the polynomial interpolation.

In some embodiments, determining a plurality of illumination measurements based on the environment light further comprises receiving a synchronization signal indicating a start of an electronic display refresh, and capturing illumination measurements based at least in part on the synchronization signal.

In some embodiments, the screen brightness amplitude is determined by computing a difference between the one or more display screen on illumination measurements and the one or more display screen off illumination measurements.

In some embodiments, the optical sensor is disposed within an electronic device comprising the display screen and the display environment comprises an area outside of the electronic device.

An electronic device configured to determine a screen brightness contribution to environment light in a display environment is further provided. In some embodiments, the electronic device may comprise a housing and a display screen attached to the housing. The display screen comprising a first side configured to emit transmitted light via a plurality of display pixels into a display environment and an optical sensor disposed within the housing, opposite the first side of the display screen, and configured to receive environment light from the display environment. The electronic device may further comprise a controller electrically coupled to the optical sensor and the display screen, the controller configured to receive, from the optical sensor, environment light comprising a screen brightness contribution; determine a plurality of illumination measurements based on the environment light; identify one or more display screen on illumination measurements corresponding to illumination measurements captured in an instance in which the display pixels proximate the optical sensor are illuminated; identify one or more display screen off illumination measurements corresponding to illumination measurements captured in an instance in which the display pixels proximate the optical sensor are not illuminated and based at least in part on a polynomial approximation; determine a screen brightness amplitude corresponding to a comparison between the one or more display screen on illumination measurements and the one or more display screen off illumination measurements; and determine the screen brightness contribution based at least in part on the screen brightness amplitude and a screen contribution correlation coefficient corresponding to a relationship between the screen brightness amplitude and the screen brightness contribution.

In some embodiments, the plurality of display pixels comprise organic light emitting diodes (OLED).

In some embodiments, the optical sensor is configured to determine illumination measurements for a plurality of color channels, wherein the screen brightness contribution is determined for each color channel of the plurality of color channels.

In some embodiments, the controller is further configured to receive environment light during a calibration process in which the display environment includes no ambient light; and determine a screen contribution correlation coefficient corresponding to a relationship between the screen brightness amplitude and the environment light.

In some embodiments, the controller is further configured to determine ambient light in the display environment by removing the screen brightness contribution from the environment light.

In some embodiments, the controller is further configured to adjust a brightness of the display screen based on the ambient light in the display environment.

In some embodiments, the polynomial approximation comprises: performing a polynomial interpolation based on a minimum display screen off illumination measurement; and determining an absolute minimum display screen off illumination measurement based on the polynomial interpolation.

In some embodiments, determining a plurality of illumination measurements based on the environment light further comprises receiving a synchronization signal indicating a start of an electronic display refresh; and capturing illumination measurements based at least in part on the synchronization signal.

A computer program product for determining a screen brightness contribution to environment light is also provided. The computer program product comprising at least one non-transitory computer-readable storage medium having computer-readable program code portions stored therein, the computer-readable program code portions comprising an executable portion configured to receive, at an optical sensor positioned proximate a first side of a display screen opposite a display environment, environment light comprising a screen brightness contribution, wherein the display screen comprises a plurality of display pixels; determine a plurality of illumination measurements based on the environment light; identify one or more display screen on illumination measurements corresponding to illumination measurements captured in an instance in which the display pixels proximate the optical sensor are illuminated; identify one or more display screen off illumination measurements corresponding to illumination measurements captured in an instance in which the display pixels proximate the optical sensor are not illuminated and based at least in part on a polynomial approximation; determine a screen brightness amplitude corresponding to a comparison between the one or more display screen on illumination measurements and the one or more display screen off illumination measurements; and determine the screen brightness contribution based at least in part on the screen brightness amplitude and a screen contribution correlation coefficient corresponding to a relationship between the screen brightness amplitude and the screen brightness contribution.

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates a cross section view of an electronic device comprising an optical sensor and controller configured in accordance with an example embodiment of the present disclosure.

FIG. 2A - FIG. 2B illustrate graphs depicting example environment light measurements based on various screen brightness adjustment methods in accordance with an example embodiment of the present disclosure.

FIG. 3 illustrates an example graph depicting environment light illumination measurements received from a display environment with little or no ambient light in accordance with an example embodiment of the present disclosure.

FIG. 4 illustrates an example graph depicting a linear relationship between the screen brightness amplitude and the screen brightness contribution in accordance with an example embodiment of the present disclosure.

FIG. 5 illustrates an example timing diagram coordinating environment light illumination measurements based on a display screen synchronization signal in accordance with an example embodiment of the present disclosure.

FIG. 6 provides a graph depicting example environment light illumination measurements received at an optical sensor in accordance with an example embodiment of the present disclosure.

FIG. 7 illustrates an example polynomial approximation of a minimum display screen off illumination measurement in accordance with an example embodiment of the present disclosure.

FIG. 8 depicts an example flow chart for determining a screen brightness contribution to environment light in accordance with an example embodiment of the present disclosure.

FIG. 9 depicts an example flow chart for determining an average illumination measurement at an optical sensor in accordance with an example embodiment of the present disclosure.

FIG. 10 illustrates an example flow chart for determining an ambient light measurement for each color channel of a plurality of color channels in accordance with an example embodiment of the present disclosure.

## DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with determining an ambient light measurement in a display environment. As understood by those of skill in the field to which the present disclosure pertains, there are numerous example scenarios in which an electronic device may need to accurately determine the ambient light in a display environment.

For example, variable screen brightness is a common feature of digital display screens. To improve the viewing experience of an electronic device having a display screen, the brightness of the phone screen, laptop screen, television screen, etc., may be adjusted based on the ambient light present in the display environment. A common technique is to measure the ambient light of the display environment using an optical sensor positioned near the display screen and adjust the brightness of the display screen according to the optical sensor measurement. For example, an electronic device may increase the brightness of the display screen in an instance in which the measured ambient light is relatively high and decrease the brightness of the display screen in an instance in which the ambient light is relatively low. Similarly, the electronic device may adjust the color of the transmitted light emitted from the display screen based on the color components of the ambient light.

Enabling dynamic adjustments to the brightness of a display screen requires continuous measurement of the ambient light in the display environment. An optical sensor comprising one or more photodiodes may be positioned near the display screen to continuously measure the intensity of environment light received from the display environment. In some embodiments, the optical sensor may be placed under the display screen and/or within the housing of the electronic device. In an instance in which the optical sensor is placed under or near the display screen, ambient light measurements may be affected by the transmitted light generated and emitted by the display screen. As such, to obtain accurate ambient light measurements, an optical sensor configured to receive environment light from the display environment may account for screen brightness contributions to the environment light received at an optical sensor configured to measure ambient light.

In some previous examples, electronic devices have attempted to measure the ambient light at an optical sensor when the pixels directly proximate the optical sensor are unlit, for example, when the pixels directly above the optical sensor are being refreshed. Aligning the measurement of ambient light with the refresh of pixels requires precise timing. In addition, aligning the measurement of ambient light with the refresh of pixels directly above the optical sensor may still be affected by the light emitted from the display screen of the electronic device. For example, the light from illuminated pixels near the ambient light sensor may be received by the optical sensor, adversely affecting the accuracy of the ambient light measurement in the display environment.

The various example embodiments described herein utilize various techniques to determine the screen brightness contribution to the environment light received at an optical sensor based on a screen contribution correlation coefficient. An accurate ambient light measurement in the display environment may be determined by accounting for the screen brightness contribution.

In general, the ambient light in a digital display environment may be represented by the equation:

$$AMBIENT\ LIGHT = ENVIRONMENT\ LIGHT - SCREEN\ BRIGHTNESS\ CONTRIBUTION$$

where, the *AMBIENT LIGHT* is the actual intensity of the ambient light present in the display environment, *ENVIRONMENT LIGHT* is the intensity of the light received at the optical sensor, and *SCREEN BRIGHTNESS CONTRIBUTION* is the amount of light attributable to the light emitted from the display screen. Accordingly, the ambient light of a display environment may be calculated by determining the screen brightness contribution and subtracting the screen brightness contribution from the environment light received at the optical sensor.

In some example embodiments described herein, a calibration process is utilized to determine a relationship between the screen brightness amplitude and the screen brightness contribution (e.g., screen contribution correlation coefficient). The screen brightness amplitude corresponds to a comparison between the intensity of environment light received at the optical sensor in an instance in which the display screen and/or the display pixels near the optical sensor are illuminated; and the intensity of environment light received at the optical sensor in an instance in which the display screen and/or the display pixels near the optical sensor are unlit. For example, in some embodiments, the screen brightness amplitude may be determined by the equation:

$$SCREEN\ BRIGHTNESS\ AMPLITUDE = Environment\_Light_{ON} - Environment\_Light_{OFF}$$

where, $Environment\_Light_{ON}$ is the intensity of environment light received when the display pixels near the optical sensor are illuminated and $Environment\_Light_{OFF}$ is the intensity of environment light received when the display pixels near the optical sensor are not illuminated.

During the calibration period, in which no ambient light is present, all environment light received at the optical sensor may be attributable to screen brightness contribution. Thus, varying the screen brightness may yield various screen brightness amplitudes and associated screen brightness contributions. The linear correlation (e.g., screen contribution correlation coefficient) between the screen brightness amplitude and the screen brightness contribution may be determined based on the calibration measurements. In some embodiments, the screen contribution correlation coefficient may be determined for each color channel, for example, the red channel, the green channel, and the blue channel when using an RGB color model.

During operation, in which the ambient light in the display environment is to be determined, the screen contribution correlation coefficient determined during calibration and based on the relationship between the screen brightness amplitude and the screen brightness contribution may be utilized to determine the screen brightness contribution to the environment light. For example, the optical sensor may perform one or more illumination measurements at a time in which the display pixels near the optical sensor are illuminated and one or more illumination measurements at a time in which the display pixels near the optical sensor are not illuminated, or unlit. The screen brightness amplitude may be determined based on the difference between these two values.

The screen brightness contribution is further determined by multiplying the screen brightness amplitude and the screen contribution correlation coefficient determined during calibration. In some embodiments, as described herein, the screen brightness contribution may be determined for each of the color channels in the color model captured by the optical sensor.

In some embodiments in which the optical sensor is positioned under the display screen of an electronic device, in order to determine a precise display screen off illumination measurement corresponding to an environment light illumination measurement captured in an instance in which the display pixels proximate the optical sensor are unlit, the measurement of the environment light may be aligned with the precise point in time the display pixels directly above the ambient light sensor are off. For example, a delay time may be determined based on one or more refresh synchronization signals. Utilizing the one or more refresh synchronization signals, the delay time may be determined such that at least one environment light measurement is captured in an instance in which the display pixels directly above the optical sensor are unlit.

To further determine a precise display screen off illumination measurement, in some embodiments, a plurality of illumination measurements before and/or after the determined display screen off illumination measurement may be captured. A polynomial approximation of the continuous light intensity may be approximated based on the plurality of display screen off illumination measurements. The polynomial approximation may be utilized to predict the precise display screen off illumination measurement corresponding to the minimum environment light intensity.

As a result of the herein described example embodiments and in some examples, the determination of a screen brightness contribution to received environment light illumination measurements may be determined. Utilizing the screen brightness contribution, the accuracy of ambient light measurements in a display environment may be greatly improved. Improving the ambient light determination in an electronic device may result in improved battery life and improved performance of the electronic device, among other things. For example, reducing the screen brightness in an optical environment having less ambient light may preserve the battery life of the electronic device. In addition, adjusting the transmitted light of the display screen based on the color composition of the ambient light in the display environment may improve the display quality of the electronic device.

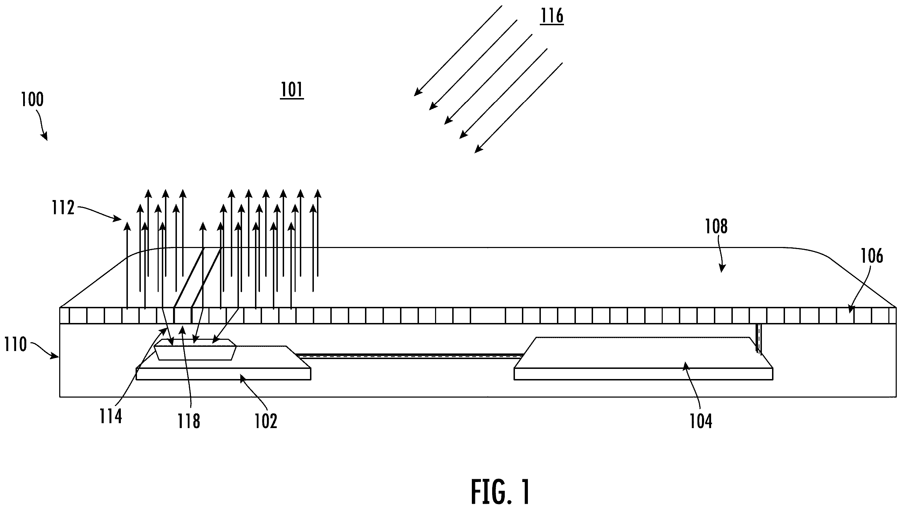

Referring now to FIG. 1, an example electronic device 100 in a display environment 101 is provided. As depicted in FIG. 1, the example electronic device 100 includes a housing 110 and a display screen 108 defining an enclosed area in which an optical sensor 102 and a controller 104 are disposed. The controller 104 is electrically coupled to the optical sensor 102 to receive at least environment light measurements and to the display screen 108. As further depicted in FIG. 1, the display screen 108 is configured to emit transmitted light 112 via a plurality of display pixels 106 into the display environment 101. During refresh, a portion of the display pixels 106 are unlit (e.g., unlit display pixels 118). As further depicted in FIG. 1, environment light comprising ambient light 116 and screen brightness contribution light 114 is received at the optical sensor 102.

As depicted in FIG. 1, the example electronic device 100 is any electronic device including a housing 110 wherein a portion of the housing 110 includes a display screen 108. As further depicted in FIG. 1, the electronic device 100 includes an optical sensor 102 configured to receive environment light for purposes of determining the ambient light 116 present in a display environment 101. In some non-limiting examples, the electronic device 100 may comprise a mobile phone, laptop, television, monitor, computer, wearable electronic device, or other mobile device.

As further depicted in FIG. 1, the example electronic device 100 includes a housing 110. The housing 110 may be any structure, packaging, case, or similar mechanism designed to provide a protective enclosure for the internal components of the electronic device 100, for example, including the optical sensor 102 and the controller 104. In some embodiments, the housing 110 together with the display screen 108 define an enclosed area.

As further depicted in FIG. 1, the electronic device 100 includes a display screen 108 comprising a plurality of display pixels 106 configured to emit transmitted light 112. A display screen 108 may be any digital display, screen, monitor, or other device configured to output information in visual form via transmitted light 112 based on a received electronic signal. A display screen 108 may be transparent or semi-transparent to certain wavelengths of light, such that environment light may be received by an optical sensor 102 behind or under the display screen 108. Although primarily depicted as an organic light-emitting diode (OLED), the display screen 108 may comprise an active-matrix OLED (AMOLED) display, or other similar variation.

In some embodiments, the display screen 108 may comprise a plurality of display pixels 106. Display pixels 106 may be the smallest unit of display in a display screen 108. A display pixel 106 may be configured to output an intensity of light or a combination of light intensities based on an electronic signal indicating a desired output. For example, in some embodiments, each pixel of a display screen 108 may emit a red, green, and blue color at different intensities to generate a specific color from the display pixel 106. In some embodiments, for example in an organic light-emitting-diode (OLED) display screen 108, each display pixel 106 may comprise an organic compound that emits light in response to an electric current. An OLED display pixel 106 may comprise a layer of organic material situated between an anode and a cathode. In an instance in which a voltage difference is applied to the anode and cathode, the movement of electrons and holes within the organic material due to the change in voltage results in the emission of light (e.g., transmitted light 112). The anode and cathode of the OLED display pixel 106 may be selected based on the conductivity and transparency of the material.

The plurality of display pixels 106 may be illuminated in a coordinated manner to generate a display image. For example, in some embodiments, the display pixels 106 may be refreshed one row at a time and move sequentially from one side of the display to the other. Due to the speed of refresh, the display screen 108 may appear to be fully illuminated. During the refresh process, one or more rows of unlit display pixels 118 may move from a first side of the display screen 108 to a second side of the display screen 108 opposite the first side. In an instance in which the optical sensor 102 is positioned within the housing 110 and under the display screen 108, during the refresh of the display screen 108, the row and/or rows of display pixels 106 directly above the optical sensor 102 may be unlit, as shown in FIG. 1 as unlit display pixels 118. In some embodiments, a synchronization signal may be sent to indicate a refresh of the display screen 108. The synchronization signal may be utilized to determine the point in time in which the unlit display pixels 118 are directly or partially above the optical sensor 102.

As further depicted in FIG. 1, a portion of the transmitted light 112 may be received at the optical sensor 102 (e.g., screen brightness contribution light 114). Such screen brightness contribution light 114 may be due to internal reflections, external reflections, internal illumination of the display pixel 106, or other similar reflections related to the illumination of the display pixel 106. The screen brightness contribution light 114 received at the optical sensor 102 is proportional to the brightness of the display screen 108. The screen brightness contribution light 114 contributes to the environment light received at the optical sensor 102, in addition to the ambient light 116 present in the display environment 101.

As further depicted in FIG. 1, the display screen 108 generates transmitted light 112. Transmitted light 112 may be any light comprising photons emitted from the display screen 108 into a display environment 101. The transmitted light 112 may be directed out one side of the display screen 108, for example, the side of the display screen 108 opposite the optical sensor 102.

As further depicted in FIG. 1, the example electronic device 100 includes an optical sensor 102 positioned within the enclosed area created by the housing 110 and the display screen 108. The optical sensor 102 is any device, sensor, photodiode, semiconductor device, or other structure that produces an electric current corresponding to the intensity of light received at the optical sensor 102. In some embodiments, the optical sensor 102 may be placed under the display screen 108, invisible from the display side of the display screen 108. In some embodiments, the optical sensor 102 may be a light sensitive semiconductor diode that creates an electron-hole pair at the p-n junction when a photon of sufficient energy strikes the diode. In this way, the electric current output by the optical sensor 102 may be proportional to the intensity of the light received at the optical sensor 102. For example, the electric current output by the optical sensor 102 may increase as the number of photons that strike the optical sensor 102 per second increases. In such an embodiment, the electric current output from the optical sensor 102 may be used to determine the intensity of light received at the optical sensor 102. In some embodiments, the light received at the optical sensor 102 (e.g., environment light) may comprise at least screen brightness contribution light 114 and ambient light 116. Although depicted under the display screen 108 in FIG. 1, in some embodiments, the optical sensor 102 may be positioned next to, or otherwise near the display screen 108.

As further depicted in FIG. 1, the example electronic device 100 includes a controller 104. A controller 104 is any hardware, software, or combination thereof configured to determine the screen brightness contribution light 114 and ambient light 116 based on the environment light measurements received from the optical sensor 102. The controller 104 may include a processor, machine, microcontroller, or other electronic device configured to send and receive electronic data related to the light received by the optical sensor 102 and determine the screen brightness contribution light 114 and the ambient light 116 based on the received electronic data. As further depicted in FIG. 1, the controller 104 may be electrically connected to the display screen 108. Such an electrical connection may enable the controller 104 to control the output of the display, for example the brightness of the transmitted light 112. Similarly, such an electrical connection may enable a controller 104 to receive synchronizing signals related to the refresh of the display screen 108.

As further depicted in FIG. 1, the electronic device 100 is positioned in a display environment 101. The display environment 101 is any space, atmosphere, surroundings, or other setting in which the transmitted light 112 from the display screen 108 is directed.

The display environment 101 may include ambient light 116 sources. Ambient light 116 may be any light received at the optical sensor 102 that is not emitted from the display screen 108, for example, light from external sources. The accurate measurement of ambient light 116 may be important to the operation of an electronic device 100. For example, the brightness of the display screen 108 may be determined based on the ambient light 116 in the display environment 101. For example, the brightness of the display screen 108 may be increased in an instance in which the ambient light 116 is high, enabling a user to view the screen in contrast to the ambient light 116 in the display environment 101. Similarly, the brightness of the display screen 108 may be decreased in an instance in which the ambient light 116 is low. Reducing the brightness of the display screen 108 in an instance in which the ambient light 116 is low reduces the contrast of the display device with the display environment 101. In addition, reducing the brightness of the display screen 108 in an instance in which the ambient light 116 is low may consume less power, improving battery life.

However, the environment light received at the optical sensor 102 may also include screen brightness contribution light 114. Screen brightness contribution light 114 is any light received at the optical sensor 102 originating from the illuminated display pixels 106 of the display screen 108. Such screen brightness contribution light 114 may be due to internal reflections, external reflections, internal illumination of the display pixel 106, or other similar reflections related to the illumination of the display pixel 106. The screen brightness contribution light 114 received at the optical sensor 102 is proportional to the brightness of the display screen 108. Accurately determining the screen brightness contribution light 114 in the environment light received at the optical sensor 102 enables accurate determination of the ambient light 116 in the display environment.

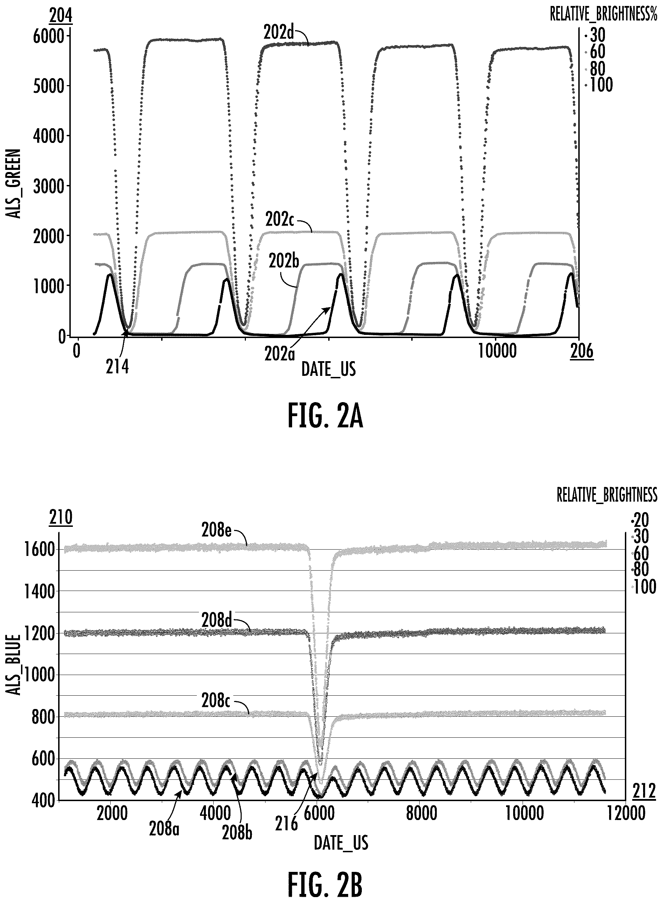

Referring now to FIG. 2A and 2B example graphs depicting example environment light measurements based on various screen brightness adjustment methods are provided.

In general, a display screen (e.g., display screen 108) utilizes one of two techniques to control brightness: pulse-width modulation or direct current (DC) dimming. Pulse-width modulation involves rapidly turning the pixels of the display screen on and off at a frequency that is too fast for the human eye to perceive. The duty cycle of ON/OFF times may be adjusted to modify brightness. For example, to increase brightness, the duration of the on-pulse width may be increased. And to decrease brightness, the duration of the on-pulse width may be decreased.

FIG. 2A depicts four plots 202a-202d illustrating the light intensity 204 (y-axis) over time 206 (x-axis) for four different relative brightness settings on an electronic device (e.g., electronic device 100) utilizing the pulse-width module method to control brightness. For example, plot 202a is set to a relative brightness setting of 30%, plot 202b is set to a relative brightness setting of 60%, plot 202c is set to a relative brightness setting of 80%, and plot 202d is set to a relative brightness setting of 100%. As depicted in FIG. 2A, the width of the pulse increases as the relative brightness increases, resulting in a greater light intensity 204.

Alternatively, DC dimming adjusts the amount of current sent to each pixel of the display screen to directly adjust the brightness of the display screen. For example, to increase brightness, the current transmitted to each pixel may be increased. To decrease brightness, the current transmitted to each pixel may be decreased.

FIG. 2B depicts four plots 208a-208e illustrating the light intensity 210 (y-axis) over time 212 (x-axis) for five different relative brightness settings on an electronic device (e.g., electronic device 100) utilizing the DC dimming method to control brightness. For example, plot 208a is set to a relative brightness setting of 20%, plot 208b is set to a relative brightness setting of 30%, plot 208c is set to a relative brightness setting of 60%, plot 208d is set to a relative brightness setting of 80%, and plot 208e is set to a relative brightness setting of 100%. As depicted in FIG. 2B, the increased light intensity 210 results not from modulation of the width of the pulse, but from an increase in current at each display pixel.

As further illustrated in FIG. 2A and FIG. 2B, the magnitude of the local minima 214, 216 vary based on the brightness setting of the display screen. The local minima 214, 216 reflect the light intensity 204, 210 in an instance in which the display pixels proximate the optical sensor are refreshing. For example, the local minima 214, 216 associated with the max brightness plot 202d, 208e is greater than the local minima 214, 216 associated with the minimum brightness plot 202a, 208a, even in an instance in which the ambient light of the display environment is constant. The local minima 214, 216 vary based on the relative brightness of the display screen due to the screen brightness contribution. In an instance in which the brightness of the display screen is reduced, the light intensity 204, 210 at the local minima 214, 216 is also reduced. Alternatively, in an instance in which the brightness of the display screen is increased, the light intensity 204, 210 at the local minima 214, 216 is also increased.

As further illustrated in FIG. 2A and FIG. 2B, the local minima 214, 216 may be quite narrow, corresponding to a narrow time period at which the light intensity 204, 210 is at a minimum due to a display screen refresh. In particular, the time period associated with the local minima 216 during operation of an electronic device utilizing DC dimming to control brightness is particularly narrow. Such narrow local minima 214, 216 may be difficult to measure without precisely timed measurements.

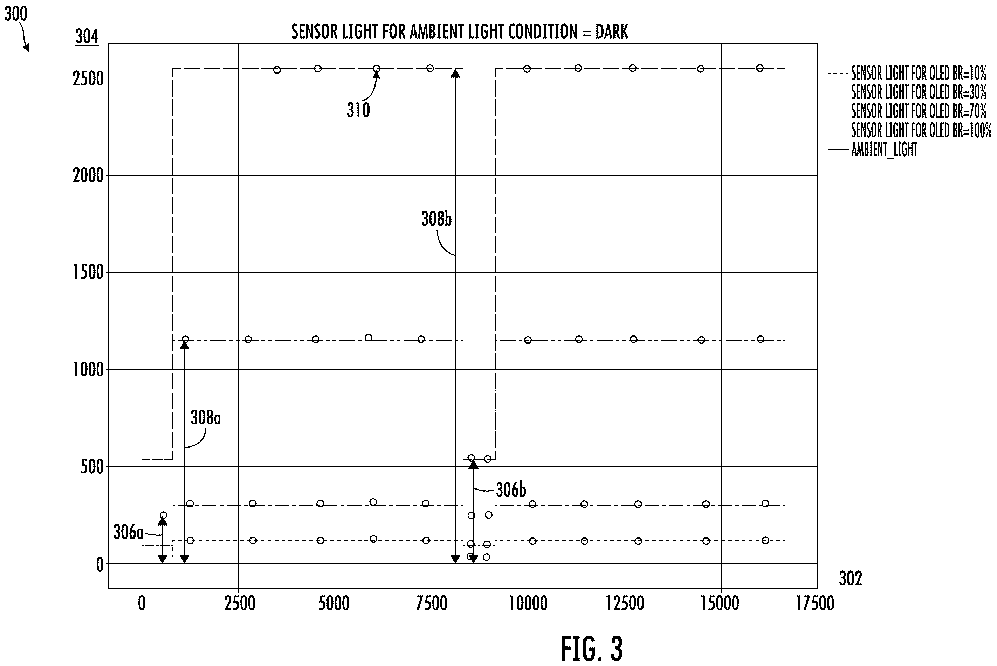

Referring now to FIG. 3, an example graph 300 depicting the light intensity 304 with respect to time 302 of environment light measurements in a display environment with little or no ambient light is provided. A display environment with little or no ambient light may be utilized during a calibration process to determine the screen contribution correlation coefficient.

As depicted in FIG. 3, a plurality of illumination measurements 310 of the environment light in the display environment may be made. Each illumination measurement 310 is associated with a light intensity 304 at a specific time 302. Each illumination measurement 310 may be classified as a display screen on illumination measurement 308a, 308b or a display screen off illumination measurement 306a, 306b. Each illumination measurement 310 may be classified based on the relative magnitude of the light intensity 304, the time 302 of the measurement, or both. For example, in some embodiments, a plurality of illumination measurements 310 may be captured. A maximum illumination measurement 310 and a minimum illumination measurement 310 may be determined. One or more illumination measurements 310 at or near the maximum illumination measurement 310 may be classified as display screen on illumination measurements 308a, 308b. One or more illumination measurements 310 at or near the minimum illumination measurement 310 may be classified as display screen off illumination measurements 306a, 306b.

Similarly, in some embodiments, the capture of illumination measurements 310 may be coordinated with the refresh of the display screen. For example, one or more illumination measurements 310 may be captured in an instance in which the unlit display pixels are above the optical sensor during a display screen refresh. The illumination measurements 310 coinciding with the unlit display pixels above the optical sensor during a screen refresh may be classified as display screen off illumination measurements 306a, 306b while the illumination measurements 310 not coinciding with the unlit display pixels above the optical sensor during a display screen refresh may be classified as display screen on illumination measurements 308a, 308b.

A screen brightness amplitude may be determined based on a comparison of the display screen on illumination measurements 308a, 308b and the display screen off illumination measurements 306a, 306b captured at an optical sensor near a display screen. The screen brightness amplitude relates generally to the intensity of light received at the optical sensor attributable to the brightness of the screen. In some embodiments, the screen brightness amplitude may be determined by subtracting one or more of the screen off illumination measurements 306a, 306b from the screen on illumination measurements 308a, 308b. In some embodiments, a mathematical calculation, such as mean, median, may be performed on a plurality of screen off illumination measurements 306a, 306b and/or screen on illumination measurements 308a, 308b previous to the calculation of the screen brightness amplitude.

A screen brightness contribution is related to the amount of light attributable to the illumination of a display screen in an instance in which the unlit display pixels above or near the optical sensor are not illuminated. In a display environment having little or no ambient light, the screen brightness contribution is equal to the display screen off illumination measurements 306a, 306b. Thus, in a calibration process, the screen brightness contribution may be determined by capturing, predicting, or calculating the value of the light intensity 304 in an instance in which the display pixels above or near the optical sensor are not illuminated, based on the display screen off illumination measurements 306a, 306b.

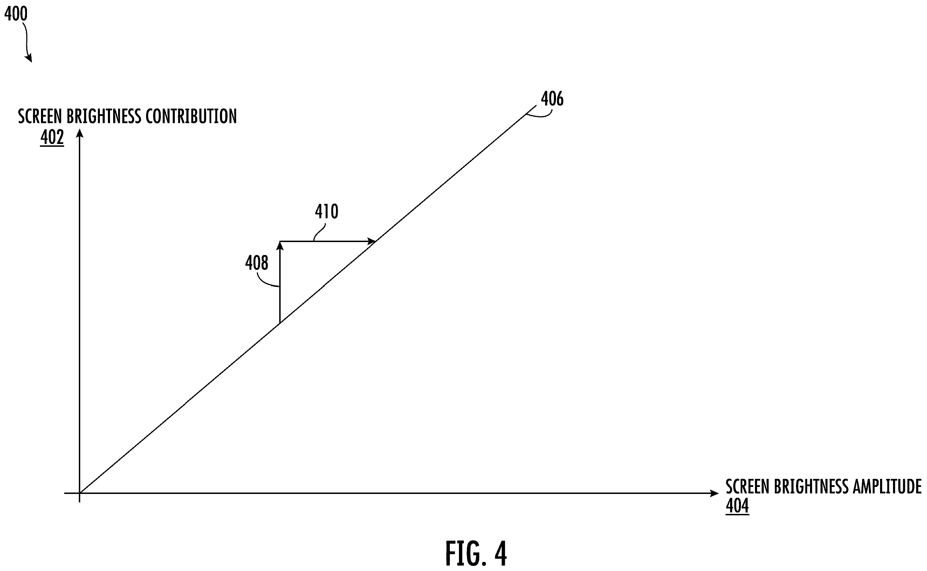

As depicted in FIG. 4, the screen brightness amplitude is linearly related to the screen brightness contribution of the display screen to the environment light measurements received at an optical sensor.

Referring now to FIG. 4, a graph 400 depicting the relationship between the screen brightness amplitude 404 and the screen brightness contribution 402 to an environment light illumination measurement is provided. As described herein, the intensity of environment light received at an optical sensor comprises ambient light (e.g., ambient light 116) and screen brightness contribution light (e.g., screen brightness contribution light 114). As depicted in FIG. 4, the screen contribution correlation line 406 represents the correlation between the screen brightness amplitude 404 and the screen brightness contribution 402.

The screen contribution correlation line 406 for an electronic device comprising a display screen and an optical sensor may be determined during a calibration period. For example, as described in relation to FIG. 3, screen off illumination measurements (e.g., screen off illumination measurements 306a, 306b) and screen on illumination measurements (e.g., screen on illumination measurements 308a, 308b) may be determined in a display environment with little or no ambient light. A comparison, such as a difference, between the screen on illumination measurements and screen off illumination measurements may be calculated to determine the screen brightness amplitude 404. A corresponding screen brightness contribution 402 may be determined based on the screen off illumination measurements since the calibration process takes place in a display environment with little or no ambient light.

The screen contribution correlation coefficient represents the linear relation between the screen brightness amplitude 404 and the screen brightness contribution 402. The screen contribution correlation coefficient may be determined by determining the slope of the screen contribution correlation line 406. For example, in some embodiments, the screen contribution correlation coefficient may represent the ratio of the change 408 in screen brightness contribution 402 to the change 410 in screen brightness amplitude 404.

The screen contribution correlation coefficient determined based on the calibration process may be utilized during operation of the electronic device to accurately determine the screen brightness contribution component of the environment light received at the optical sensor, and thus, the ambient light in the display environment.

For example, during operation, a plurality of environment light measurements may be captured comprising ambient light and the screen brightness contribution light. As described in relation to FIG. 3, each of the environment light measurements may be classified as a display screen on illumination measurement or a display screen off illumination measurement. In some instances, one or more environment light measurements may be discarded. Utilizing the display screen on illumination measurements and the display screen off illumination measurements, a screen brightness amplitude may be determined, for example by the equation:

$$SCREEN\ BRIGHTNESS\ AMPLITUDE = Environment\_Light_{ON} - Environment\_Light_{OFF}$$

where $Environment\_Light_{ON}$ is determined based on the display screen on illumination measurements, $Environment\_Light_{OFF}$ is determined based on the display screen off illumination measurements, and $SCREEN\ BRIGHTNESS\ AMPLITUDE$ is the screen brightness amplitude for the given set of measurements. The screen brightness contribution may then be determined by the equation:

$$SCREEN\ BRIGHTNESS\ CONTIRBUTION$$
$$= SCREEN\ CONTRIBUTION\ CORRELATION\ COEFFECIENT$$
$$* SCREEN\ BRIGHTNESS\ AMPLITUDE$$

where $SCREEN\ BRIGHTNESS\ CONTIRBUTION$ is the light intensity attributed to the screen brightness, $SCREEN\ CONTRIBUTION\ CORRELATION\ COEFFECIENT$ is the screen contribution correlation coefficient determined during the calibration process, and $SCREEN\ BRIGHTNESS\ AMPLITUDE$ is the screen brightness amplitude. With the screen brightness contribution determined, the ambient light may be determined by the equation:

$AMBIENT\ LIGHT = ENVIRONMENT\ LIGHT - SCREEN\ BRIGHTNESS\ CONTRIBUTION$ where $AMBIENT\ LIGHT$ is the light present from external sources in the display environment, $ENVIRONMENT\ LIGHT$ is the light received at the optical sensor, and $SCREEN\ BRIGHTNESS\ CONTRIBUTION$ is the amount of light attributable to the brightness of the display screen.

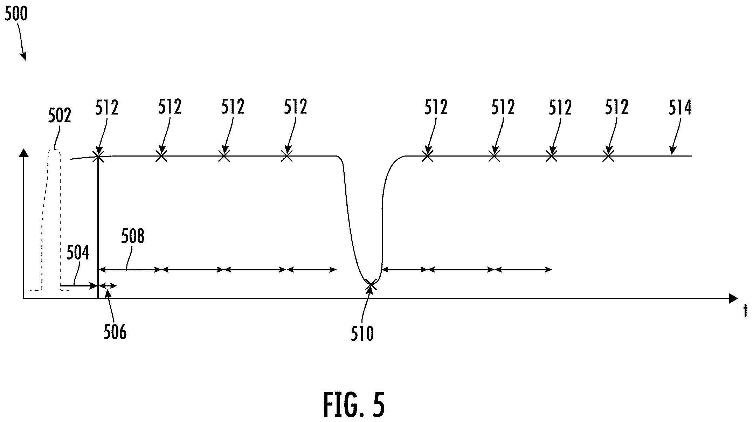

Referring now to FIG. 5, an example timing diagram 500 comprising an example synchronization signal 502 and the corresponding illumination measurement 514 is provided.

As depicted in FIG. 5, the example timing diagram 500 includes an example synchronization signal 502. The synchronization signal 502 is any electronic signal or series of electronic signals indicating one or more events in the refresh period of a display screen. A refresh period of a display screen may be any period in which the content or output of the display screen is updated. As depicted in FIG. 5, the example synchronization signal 502 indicates the start of a refresh period. In some embodiments, the synchronization signal 502 may be asserted with a refresh rate at or near 60 hertz. The display screen may refresh multiple times between subsequent assertions of the synchronization signal 502. For example, the display screen may refresh four times between assertions of the synchronization signal 502, or at a frequency of 240 hertz. In some embodiments, the synchronization signal 502 may comprise a VSYNC signal.

The synchronization signal 502 may initiate a refresh period in which the rows of display pixels comprising the display screen may be refreshed. In some embodiments, the refresh of the delay pixels may occur one row at a time and move sequentially from one side of the display screen to the other. The illumination measurement 514 represents an example illumination intensity captured by an optical sensor positioned under the display screen. The rapid decline in illumination intensity corresponds with the time in which the display pixels above or near the optical sensor are unlit.

Utilizing a synchronization signal 502, the precise timing of the display screen on illumination measurements 512 and the display screen off illumination measurements 510 may be determined. For example, a delay time 504 may be determined to align the display screen off illumination measurement 510 with the time at which the display pixels near or above the optical sensor are unlit and the illumination measurement 514 is at or near a minimum. In some embodiments, the delay time 504 may be the time from the first assertion of the synchronization signal 502 to the start of the integration time 506 of the optical sensor. The display screen off illumination measurements 510 and the display screen on illumination measurements 512 may consider the integration time 506 of the optical sensor to ensure the full integration time 506 falls within a period of time in which the pixels near or above the optical sensor are completely illuminated or completely unlit. In some embodiments, a sampling time 508 may also be determined to ensure subsequent samples are aligned with the periods of time in which the pixels near or above the optical sensor are completely illuminated or completely unlit.

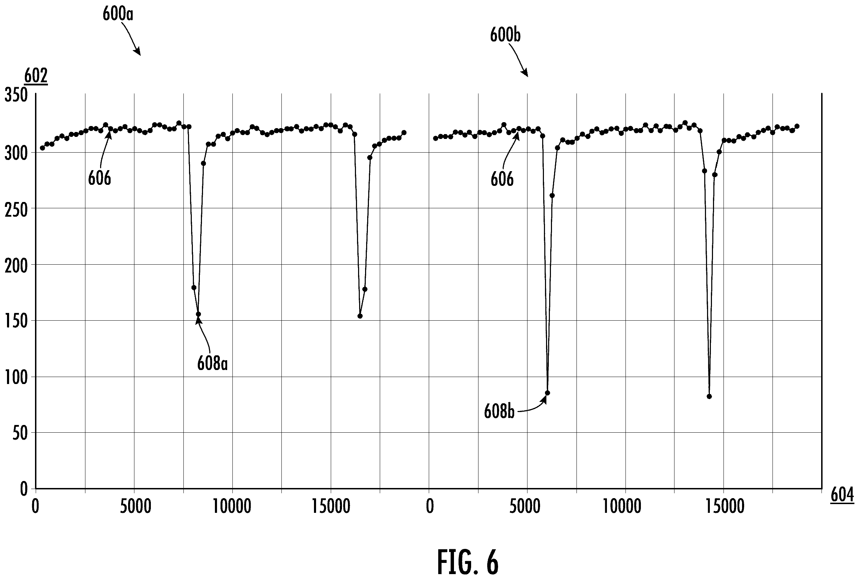

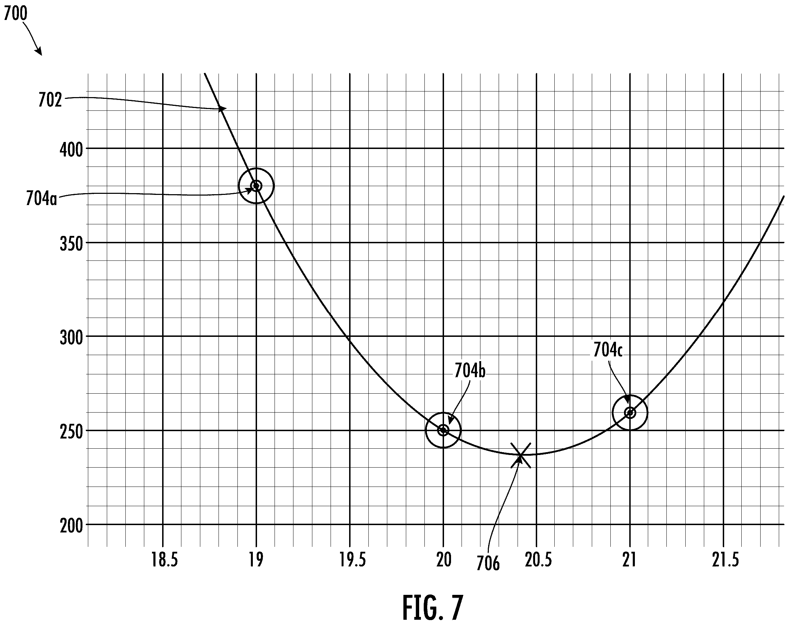

Referring now to FIG. 6, example graphs 600a, 600b are provided depicting a plurality of illumination measurements 606 representing the light intensity 602 of the received environment light at an optical sensor at an associated time 604. In graph 600a, the timing of the illumination measurement corresponding with a display screen off illumination measurement 606 does not precisely align with the pixels near or above the optical sensor being unlit. Thus, the determined minimum display screen off illumination measurement 608a is significantly higher than the minimum display screen off illumination measurement 608b measured in graph 600b. Graph 600b more accurately determines the minimum display screen off illumination measurement 608b. Such an accurate determination may be accomplished via precise timing, for example, utilizing synchronization signals as described in FIG. 5. An accurate determination of the minimum display screen off illumination measurement may additionally be determined using a polynomial extrapolation, for example, as described in relation to FIG. 7. Accurate measurements of the minimum display screen off illumination enable accurate determination of the screen brightness amplitude, the screen brightness contribution, and the ambient light.

Referring now to FIG. 7, an example polynomial approximation 700 is provided. As depicted in FIG. 7, a plurality of illumination measurements 704a-704c are captured and classified as display screen off illumination measurements. However, depending on the precise timing of the optical sensor measurements, none of the display screen off illumination measurements 704a-704c may correspond with the absolute minimum display screen off illumination measurement 706. A polynomial 702 may be determined, corresponding to one or more illumination measurements 704a-704c. In an instance in which one or more illumination measurements 704a-704c are fit to a polynomial 702, the minimum of the polynomial 702 may be determined and the minimum may be utilized as the absolute minimum display screen off illumination measurement 706.

As depicted in FIG. 7, in one embodiment, the polynomial approximation 700 may include determining the minimum illumination measurement 704b in the plurality of captured illumination measurements 704a-704c. The polynomial approximation 700 may further include determining the illumination measurements adjacent to the minimum illumination measurement 704b (e.g., illumination measurement 704a and illumination measurement 704c). A polynomial fit algorithm, such as a least squares polynomial fit algorithm or a polynomial regression model, may be utilized to fit a polynomial to the plurality of illumination measurements 704a-704c. The polynomial approximation 700 may further find the local minimum of the polynomial 702 fitting the plurality of illumination measurements 704a-704c. The local minimum of the polynomial 702 may be used as the absolute minimum display screen off illumination measurement 706.

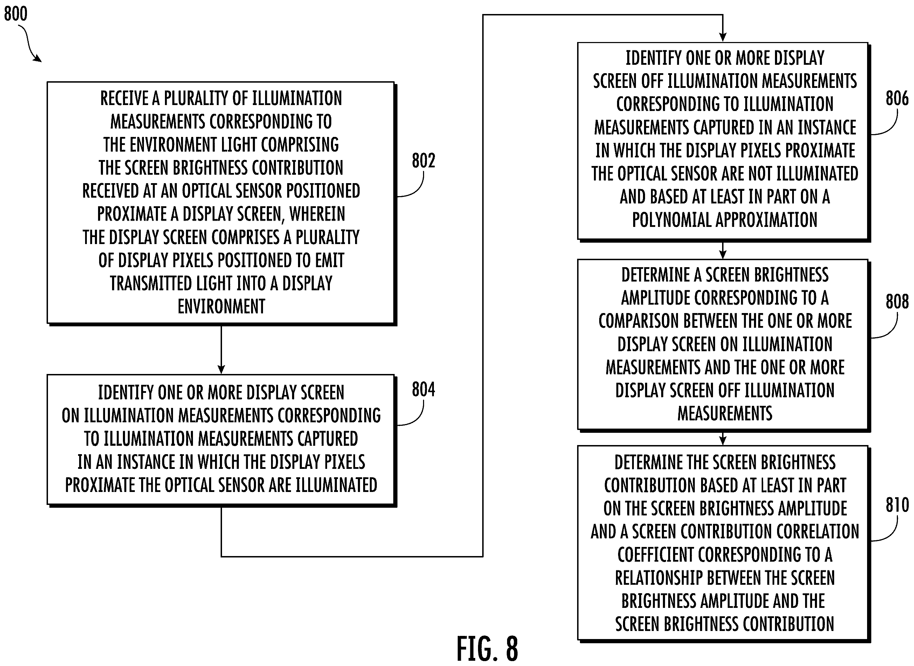

Referring now to FIG. 8, an example process 800 for determining a screen brightness contribution (e.g., screen brightness contribution light 114) to environment light comprising ambient light (e.g., ambient light 116) is provided. At block 802, a controller (e.g., controller 104) receives a plurality of illumination measurements (e.g., illumination measurements 310, 510, 512, 606, 704) corresponding to the environment light comprising the screen brightness contribution received at an optical sensor (e.g., optical sensor 102) positioned proximate a display screen (e.g., display screen 108), wherein the display screen comprises a plurality of display pixels (e.g., display pixels 106) positioned to emit transmitted light (e.g., transmitted light 112) into a display environment (e.g., display environment 101). As described herein, the optical sensor may be positioned near a display screen to determine the ambient light in the display environment. In some embodiments, the optical sensor may be positioned under the display screen, within the housing of an electronic device. The optical sensor may be configured to capture environment light, including ambient light from the display environment and screen brightness contribution light due to the illumination of the display pixels near the optical sensor. In some embodiments, the optical sensor may be configured to capture illumination measurements at a time in which the display pixels closest to the optical sensor are illuminated and illumination measurements at a time in which the display pixels closest to the optical sensor are unlit, or not illuminated.

At block 804, the controller identifies one or more display screen on illumination measurements (e.g., display screen on illumination measurements 512) corresponding to illumination measurements captured in an instance in which the display pixels proximate the optical sensor are illuminated. The controller may utilize techniques to determine the illumination measurements captured at a time the display pixels closest the optical sensor were illuminated. In some embodiments, the controller may analyze the magnitude of the captured illumination measurements to identify the one or more display screen on illumination measurements. For example, the controller may determine a threshold and identify all illumination measurements having a light intensity above the threshold as display screen on illumination measurements. In some embodiments, an average of a plurality of illumination measurements may be used to identify one or more display screen on illumination measurements. In some embodiments, the timing of the capture may be utilized to identify the one or more display screen on illumination measurements, for example, illumination measurements captured at a determined time at which the display pixels proximate the optical sensor are illuminated.

At block 806, the controller identifies one or more display screen off illumination measurements (e.g., display screen off illumination measurements 510) corresponding to illumination measurements captured in an instance in which the display pixels proximate the optical sensor are not illuminated and based at least in part on a polynomial approximation. The controller may utilize techniques to determine the illumination measurements captured at a time the display pixels closest the optical sensor were not illuminated, or unlit. In some embodiments, the controller may analyze the magnitude of the captured illumination measurements to identify the one or more display screen off illumination measurements. For example, the controller may determine a threshold and identify all illumination measurements having a light intensity below the threshold as display screen off illumination measurements. In some embodiments, an average of a plurality of illumination measurements may be used to identify one or more display screen off illumination measurements. In some embodiments, the timing of the capture may be utilized to identify the one or more display screen off illumination measurements, for example, illumination measurements captured at a determined time at which the display pixels proximate the optical sensor are unlit. Further, as described in relation to FIG. 7, in some embodiments, a polynomial approximation may be used to identify a minimum display screen off illumination measurement.

At block 808, the controller determines a screen brightness amplitude corresponding to a comparison between the one or more display screen on illumination measurements and the one or more display screen off illumination measurements. The screen brightness amplitude is a representation of the brightness of the display screen based on a comparison of the received environment light in an instance in which the display pixels proximate the optical sensor are illuminated and the received environment light in an instance in which the display pixels proximate the optical sensor are unlit. Any comparison may be used to determine the screen brightness amplitude. For example, a difference between one or more display screen on illumination measurements and one or more display screen off illumination measurements may represent the screen brightness amplitude.

At block 810, the controller determines the screen brightness contribution based at least in part on the screen brightness amplitude and a screen contribution correlation coefficient corresponding to a relationship between the screen brightness amplitude and the screen brightness contribution. A controller may leverage the linear correlation between the screen brightness amplitude and the screen brightness contribution to determine the screen brightness contribution light in the received environment light illumination measurements. For example, in a calibration process, a screen contribution correlation coefficient may be determined based on measured screen brightness contributions for a plurality of screen brightness amplitude values in a display environment with little or no ambient light. Utilizing the screen contribution correlation coefficient, the screen brightness contribution to the environment light may be determined based on the determined screen brightness amplitude. With the screen brightness contribution determined, an accurate ambient light measurement may be determined based on the received environment light.

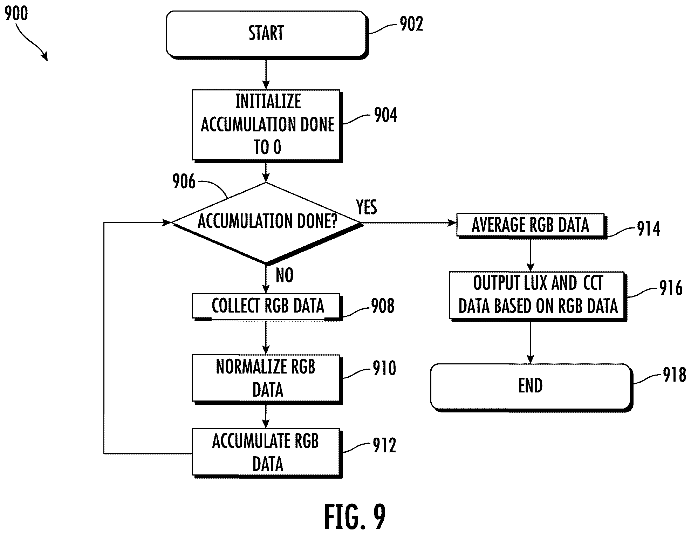

Referring now to FIG. 9, a flow chart illustrating a process 900 for determining average illumination measurements including the lux and correlated color temperature (CCT) based on red, green, blue (RGB) buffered capture data of light received at an optical sensor, is provided. In some embodiments, the illumination measurements based on environment light received at an optical sensor may be determined based on accumulation of illumination measurements at the optical sensor over a period of time. Illumination measurements based on accumulation over a period of time may be more accurate as the accumulation compensates for outlier measurements by accumulating for a period of time. However, in an instance in which the accumulation period is too long, the determinations (e.g., ambient light determination) based on the illumination measurements may be delayed. Thus, the period of time for accumulation of illumination measurements may be fine-tuned to improve accuracy while limiting adverse effects due to increased latency.

Example illumination measurements may be derived from measurements of the environment light collected at an optical sensor, for example, RGB light intensity data. Example illumination measurements may include lux and correlated color temperature of the environment light received at the optical sensor. Lux is a measurement of the intensity of light received in a determined area. The lux of environment light received at the optical sensor may indicate the brightness of light in the display environment, plus the screen brightness contribution. CCT is a measurement of the color cast of the environment light. The CCT of the environment light may range from a cool light to a warm light, often measured in Kelvin degrees.

At block 902, the process 900 for determining the average illumination measurements begins.

At block 904, the accumulation done flag indicating accumulation is done is set to 0, indicating accumulation should continue.

At block 906, the accumulation done flag is checked. If accumulation is done, the process 900 continues at block 914. If accumulation is not done, the process 900 continues at block 908.

At block 908, the RGB data related to the environment light received at an optical sensor are collected in one or more buffers. The RGB data corresponds to the received environment light over a period of time.

At block 910, the RGB data collected in the buffer are normalized. Normalization may be related to the number of values collected in the buffer, the integration time of the optical sensor, or other similar characteristics. In some embodiments, the normalized RGB data or a single normalized RGB data value may be transmitted to a separate buffer configured to store the normalized data. The accumulation may include a running summation, average, or other mathematical calculation of the normalized data with data already accumulated.

At block 912, the RGB data is accumulated in an accumulation buffer.

At block 914, the average RGB values for the accumulated illumination measurements are determined.

At block 916, the average lux value and CCT value are determined based on the accumulated RGB values. In some embodiments, a CCT matrix may be utilized to determine the lux value and CCT value based on the normalized RGB data. Once determined, the lux value and CCT value are output, for example, to an electrically coupled controller configured to receive the accumulated illumination measurements.

At block 918, the process 900 ends.

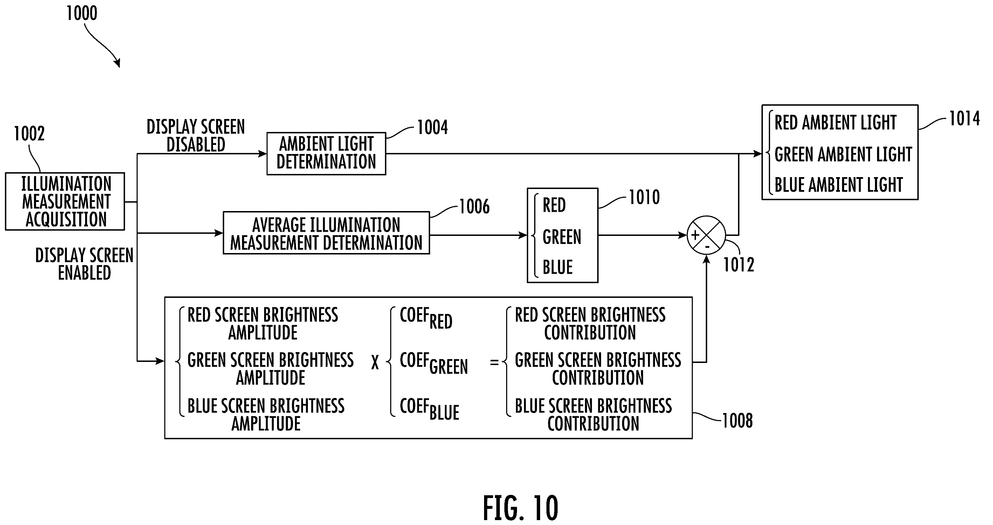

Referring now to FIG. 10, a flow chart illustrating an example process 1000 for determining the ambient light in a display environment for a plurality of color channels is provided. An optical sensor (e.g., optical sensor 102) may be configured to capture environment light according to the wavelength of the environment light. For example, an optical sensor may include one or more filters to enable acquisition of environment light according to wavelength. In such an example, the illumination measurements may be recorded for each captured wavelength. In some embodiments, the optical sensor may be configured to separately capture red wavelength environment light, green wavelength environment light, and blue wavelength environment light. In some embodiments, the optical sensor may be configured to capture illumination measurements related to infrared wavelengths of the environment light separately.

In an instance in which the optical sensor is configured to acquire illumination measurements based on the wavelength of the environment light received at the optical sensor, a screen contribution correlation coefficient may be determined for each wavelength of environment light. For example, during a calibration process, the screen brightness amplitude and corresponding screen brightness contribution may be recorded for each wavelength of environment light captured at the optical sensor. Based on the screen brightness amplitude and the screen brightness contribution, a screen contribution correlation coefficient may be determined for each wavelength of environment light. Thus, in an embodiment in which the optical sensor is configured to capture illumination measurements for red, green, and blue wavelengths of light separately, a red screen contribution correlation coefficient, a green screen contribution correlation coefficient, and a blue screen contribution correlation coefficient may each be determined.

As depicted in FIG. 10, at block 1002, illumination measurement acquisition is performed to determine illumination measurements for each of the wavelengths of environment light captured at the optical sensor. In some embodiments, an accumulation process, such as the process 900 described in relation to FIG. 9 may be utilized for illumination measurement acquisition.

In an instance in which the display screen is disabled, the process 1000 continues at block 1004, where the ambient light is determined. In an instance in which the display screen is disabled, there is no display screen contribution to the received environment light, thus, all the received environment light is ambient light. In such an instance, the red portion of the ambient light, the green portion of the ambient light, and the blue portion of the ambient light may be determined directly from the illumination measurements captured during the illumination measurement acquisition at block 1002. A display screen may be disabled, for example in an instance in which the display screen is locked and the display screen pixels are not illuminated. The process 1000 continues with the output of the red ambient light, the green ambient light, and the blue ambient light at block 1014.

In an instance in which the display screen is enabled, the process 1000 continues at block 1006 and block 1008. The display screen is enabled in an instance in which the electronic device comprising the display screen is unlocked, or otherwise configured to emit transmitted light into the display environment. For example, as described in relation to FIG. 2A - FIG. 2B, in some embodiments, the display screen may be configured to adjust the brightness of output optical data according to a pulse width modulation method and/or a DC dimming method.

At block 1006, an average illumination measurement based on the received environment light at the optical sensor is determined. The average illumination measurement may be any illumination measurement related to the intensity of environment light, including the ambient light of the display environment, received at the optical sensor. As described herein, the environment light may comprise ambient light in the display environment and screen brightness contribution light from the illumination of display screen pixels at or near the optical sensor. The average illumination measurement may relate to the intensity of light received in an instance in which the display screen pixels at or near the optical sensor are illuminated, the intensity of light received in an instance in which the display screen pixels at or near the optical sensor are unlit, or any combination thereof.

At block 1010, the red, green, and blue portions of the average illumination measurements may be determined. In an instance in which the optical sensor is configured to receive illumination measurements of the environment light according to red, green, and blue wavelengths, the red, green, and blue portions of the average illumination measurements may be determined separately based on the illumination measurements received by the optical sensor.

At block 1008, the screen brightness contribution for each color channel received at the optical sensor are determined. As described herein, the screen brightness amplitude may be determined based on a relationship (e.g., difference) between the illumination measurements in an instance in which the display pixels at or near the optical sensor are illuminated and the illumination measurements in an instance in which the display pixels at or near the optical sensor are not illuminated (e.g., unlit). In an instance in which the optical sensor is configured to receive illumination measurements for each color channel (e.g., red, green, blue), the screen brightness amplitude may be determined for each color channel (e.g., red screen brightness amplitude, green screen brightness amplitude, and blue screen brightness amplitude).

As further described, a separate screen contribution correlation coefficient may be determined for each wavelength of environment light during the calibration process (e.g., red screen contribution correlation coefficient, green screen contribution correlation coefficient, and blue screen contribution correlation coefficient). The screen contribution correlation coefficient may be multiplied by the screen brightness amplitude to determine the screen contribution for each color channel (e.g., red screen brightness contribution, green screen brightness contribution, blue screen brightness contribution).

At block 1012, the ambient light for each color channel is determined by subtracting the screen brightness contribution for each color channel (e.g., red screen brightness contribution, green screen brightness contribution, and blue screen brightness contribution) from the average illumination determination for the color channel.

At block 1014, the ambient light component for each color channel (e.g., red ambient light, green ambient light, blue ambient light) is output. Determining the ambient light component for each color channel may enable more accurate adjustment to display parameters based on the ambient light present in the display environment. For example, if the ambient light in the display environment includes ambient light containing relatively high amounts of green wavelength light, the colors and/or brightness of the display screen output may be adjusted to the ambient light of the display environment to maximize the quality of the output optical display data. In addition, the ambient light component for each color channel may enable automatic white balance adjustments to the digital display. White balance adjustments may change the color temperature and/or color tint of an image, improving the quality of images displayed on the digital display.

While this detailed description has set forth some embodiments of the present invention, the appended claims cover other embodiments of the present invention which differ from the described embodiments according to various modifications and improvements. For example, one skilled in the art may recognize that such principles may be applied to any electronic device including a display screen and configured to measure the ambient light in a display environment, for example, mobile phones, laptops, televisions, monitors, computers, wearable electronic devices, or other mobile devices.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

**Claims**

1. A method for determining a screen brightness contribution to environment light, the method comprising:

   receiving (802) a plurality of illumination measurements corresponding to the environment light comprising the screen brightness contribution received at an optical sensor positioned proximate a display screen,

wherein the display screen comprises a plurality of display pixels positioned to emit transmitted light into a display environment;

identifying (804) one or more display screen on illumination measurements corresponding to illumination measurements captured in an instance in which the display pixels proximate the optical sensor are illuminated;

identifying (806) one or more display screen off illumination measurements corresponding to illumination measurements captured in an instance in which the display pixels proximate the optical sensor are not illuminated and based at least in part on a polynomial approximation;

determining (808) a screen brightness amplitude corresponding to a comparison between the one or more display screen on illumination measurements and the one or more display screen off illumination measurements; and

determining (810) the screen brightness contribution based at least in part on the screen brightness amplitude and a screen contribution correlation coefficient corresponding to a relationship between the screen brightness amplitude and the screen brightness contribution.

2. The method of Claim 1, wherein the plurality of display pixels comprise organic light emitting diodes (OLED).

3. The method of Claim 1, wherein the optical sensor is configured to determine illumination measurements for a plurality of color channels.

4. The method of Claim 3, wherein the screen brightness contribution is determined for each color channel of the plurality of color channels.

5. The method of Claim 1, further comprising:

receiving environment light during a calibration process in which the display environment includes no ambient light; and

determining a screen contribution correlation coefficient corresponding to a relationship between the screen brightness amplitude and the environment light.

6. The method of Claim 1, further comprising:
determining ambient light in the display environment by removing the screen brightness contribution from the environment light.

7. The method of Claim 6, further comprising:
adjusting a brightness of the display screen based on the ambient light in the display environment.

8. The method of Claim 1, wherein the polynomial approximation comprises:

performing a polynomial interpolation based on a minimum display screen off illumination measurement; and

determining an absolute minimum display screen off illumination measurement based on the polynomial interpolation.

9. The method of Claim 1, wherein determining a plurality of illumination measurements based on the environment light further comprises:

receiving a synchronization signal indicating a start of an electronic display refresh, and

capturing illumination measurements based at least in part on the synchronization signal.

10. The method of Claim 1, wherein the screen brightness amplitude is determined by computing a difference between the one or more display screen on illumination measurements and the one or more display screen off illumination measurements.

11. The method of Claim 1, wherein the optical sensor is disposed within an electronic device comprising the display screen and the display environment comprises an area outside of the electronic device.

12. An electronic device comprising:

a housing;
a display screen attached to the housing, the display screen comprising:

a first side configured to emit transmitted light via a plurality of display pixels into a display environment; and an optical sensor disposed within the housing, opposite the first side of the display screen, and configured to receive environment light from the display environment; and

a controller electrically coupled to the optical sensor and the display screen, the controller configured to:

receive, from the optical sensor, environment light comprising a screen brightness contribution;

determine a plurality of illumination measurements based on the environment light;

identify (804) one or more display screen on illumination measurements corresponding to illumination measurements captured in an instance in which the display pixels proximate the optical sensor are illuminated;

identify (806) one or more display screen off illumination measurements corresponding to illumination measurements captured in an instance in which the display pixels proximate the optical sensor are not illuminated and based at least in part on a polynomial approximation;

determine (808) a screen brightness amplitude corresponding to a comparison between the one or more display screen on illumination measurements and the one or more display screen off illumination measurements; and

determine (810) the screen brightness contribution based at least in part on the screen brightness amplitude and a screen contribution correlation coefficient corresponding to a relationship between the screen brightness amplitude and the screen brightness contribution.

13. The electronic device of Claim 12, wherein the plurality of display pixels comprise organic light emitting diodes (OLED).

14. The electronic device of Claim 12, wherein the optical sensor is configured to determine illumination measurements for a plurality of color channels, and wherein the screen brightness contribution is determined for each color channel of the plurality of color channels.

15. The electronic device of Claim 12, further comprising:

receiving environment light during a calibration process in which the display environment includes no ambient light; and

determining a screen contribution correlation coefficient corresponding to a relationship between the screen brightness amplitude and the environment light.

16. The electronic device of Claim 12, further comprising:
determining ambient light in the display environment by removing the screen brightness contribution from the environment light.

17. The electronic device of Claim 16, further comprising:
adjusting a brightness of the display screen based on the ambient light in the display environment.

18. The electronic device of Claim 12, wherein the polynomial approximation comprises:

performing a polynomial interpolation based on a minimum display screen off illumination measurement; and

determining an absolute minimum display screen off illumination measurement based on the polynomial interpolation.

19. The electronic device of Claim 12, wherein determining a plurality of illumination measurements based on the environment light further comprises:

receiving a synchronization signal indicating a start of an electronic display refresh; and

capturing illumination measurements based at least in part on the synchronization signal.

20. A computer program product for determining a screen brightness contribution to environment light, the computer program product comprising at least one non-transitory computer-readable storage medium having computer-readable program code portions stored therein, the computer-readable program code portions comprising an executable portion configured to:

receive, at an optical sensor positioned proximate a first side of a display screen opposite a display environment, environment light comprising a screen brightness contribution,

wherein the display screen comprises a plurality of display pixels;

determine a plurality of illumination measurements based on the environment light;

identify (804) one or more display screen on illumination measurements corresponding to illumination measurements captured in an instance in which the display pixels proximate the optical sensor are illuminated;

identify (806) one or more display screen off illumination measurements corresponding to illumination measurements captured in an instance in which the display pixels proximate the optical sensor are not illuminated and based at least in part on a polynomial approximation;

determine (808) a screen brightness amplitude corresponding to a comparison between the one or more display screen on illumination measurements and the one or more display screen off illumination measurements; and

determine (810) the screen brightness contribution based at least in part on the screen brightness amplitude and a screen contribution correlation coefficient corresponding to a relationship between the screen brightness amplitude and the screen brightness contribution.

FIG. 1

FIG. 2A

FIG. 2B

FIG. 3

FIG. 4

EP 4 564 343 A1

FIG. 5

FIG. 6

EP 4 564 343 A1

**FIG. 7**

FIG. 8

EP 4 564 343 A1

START ⟶ 902

INITIALIZE
ACCUMULATION DONE
TO 0 ⟶ 904

906 ⟶ ACCUMULATION DONE?

YES ⟶ AVERAGE RGB DATA ⟶ 914

OUTPUT LUX AND CCT
DATA BASED ON RGB DATA ⟶ 916

END ⟶ 918

NO

COLLECT RGB DATA ⟶ 908

NORMALIZE RGB
DATA ⟶ 910

ACCUMULATE RGB
DATA ⟶ 912

FIG. 9

EP 4 564 343 A1

FIG. 10

**EUROPEAN SEARCH REPORT**

Europäisches
Patentamt
European
Patent Office
Office européen
des brevets

Application Number

EP 24 21 4081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/100161 A1 (ZHOU LUMING [CN] ET AL) 30 March 2023 (2023-03-30) <br> * paragraph [0030] - paragraph [0076] * <br> * figures 1-5 * | 1-20 | INV. <br> G09G3/3208 <br> G09G5/10 |
| A | US 2023/010162 A1 (CHOI SANGMOO [US] ET AL) 12 January 2023 (2023-01-12) <br> * paragraph [0014] - paragraph [0051] * <br> * figures 2, 4, 6, 8 * | 1-20 | |
| A | US 2022/254843 A1 (BAREL ELIYAHU [IL] ET AL) 11 August 2022 (2022-08-11) <br> * paragraph [0011] - paragraph [0031] * <br> * figures 2, 3 * | 1-20 | |
| A | CN 115 290 299 B (SHENZHEN GOODIX TECH CO LTD) 7 April 2023 (2023-04-07) <br> * paragraph [0059] - paragraph [0152] * <br> * figures 1-6 * <br> & US 2025/022441 A1 (YANG XIANGYU [CN]) 16 January 2025 (2025-01-16) | 1-20 | |

TECHNICAL FIELDS
SEARCHED (IPC)

G09G

The present search report has been drawn up for all claims

| Place of search | Date of completion of the search | Examiner |
|---|---|---|
| The Hague | 1 April 2025 | Etienne, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4081

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | | Publication date |
|---|---|---|---|---|
| US 2023100161 A1 | 30-03-2023 | CN | 113899449 A | 07-01-2022 |
| | | EP | 4160585 A1 | 05-04-2023 |
| | | KR | 20230046932 A | 06-04-2023 |
| | | US | 11629994 B1 | 18-04-2023 |
| US 2023010162 A1 | 12-01-2023 | NONE | | |
| US 2022254843 A1 | 11-08-2022 | CN | 116917977 A | 20-10-2023 |
| | | EP | 4292074 A1 | 20-12-2023 |
| | | US | 11404494 B1 | 02-08-2022 |
| | | WO | 2022173569 A1 | 18-08-2022 |
| CN 115290299 B | 07-04-2023 | CN | 115290299 A | 04-11-2022 |
| | | US | 2025022441 A1 | 16-01-2025 |
| | | WO | 2024067042 A1 | 04-04-2024 |

EPO FORM P0459

For more details about this annex : see Official Journal of the European Patent Office, No. 12/82